# EUROPEAN PATENT SPECIFICATION

(11) **EP 0 543 126 B1**
(45) Date of publication and mention of the grant of the patent: **05.03.1997**
(21) Application number: 92116917.3
(22) Date of filing: 02.10.1992
(51) Int. Cl.: H04L 12/42

(54) **Communication control apparatus**
Kommunikationskontrolleinrichtung
Dispositif de contrôle pour communication

(30) Priority: 08.10.1991 JP 260279/91
(43) Date of publication of application: 26.05.1993
(73) Proprietor: MITSUBISHI DENKI KABUSHIKI KAISHA, Tokyo (JP)
(72) Inventor: Okamoto, Yasushi, c/o Kitaitami Seisakusho, Itami-shi, Hyogo-ken (JP); Noda, Sukehisa, c/o Kitaitami Seisakusho, Itami-shi, Hyogo-ken (JP)
(74) Representative: Prüfer, Lutz H., Dipl.-Phys.

(56) References cited:
- EP-A- 0 290 934
- EP-A- 0 332 097
- EP-A- 0 367 177
- WO-A-87/07459

## Description

### BACKGROUND OF THE INVENTION

### Field of the Invention

The present invention relates to a communication control apparatus according to the preambles of claims 1,3, and 5.

### Description of the Related Art

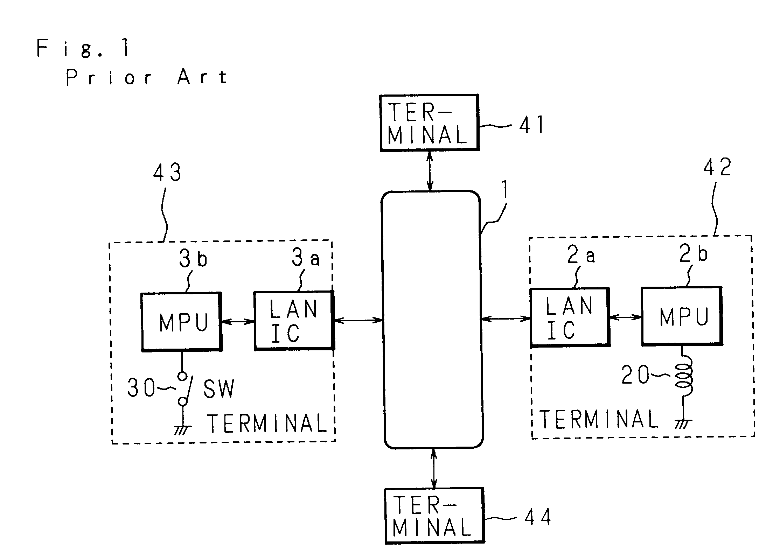

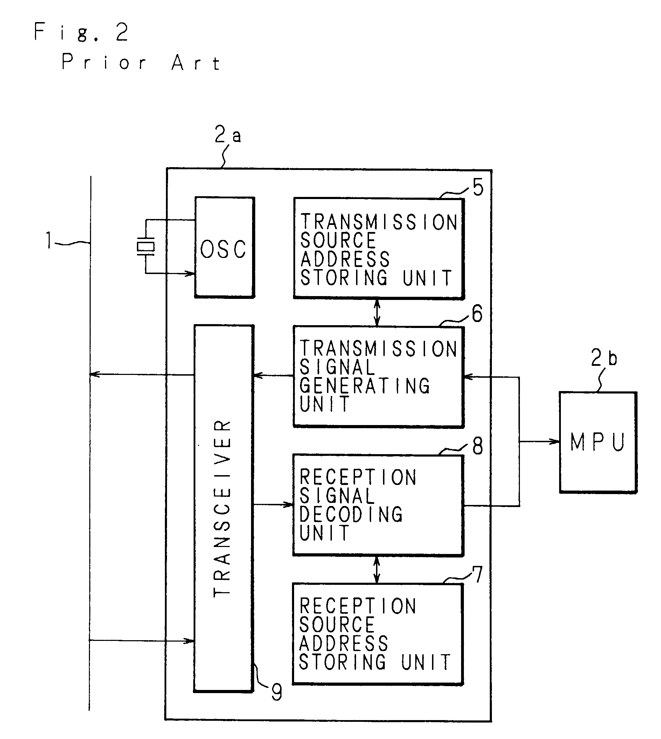

Fig. 1 is a schematic diagram showing a configuration example of a LAN system to be installed in a vehicle as an example of a conventional LAN system, and Fig. 2 is a block diagram showing an outline of inner configuration of a LAN IC as communication control apparatus to whose LAN wiring, a plurality of terminals are connected.

In Fig. 1 and Fig. 2, four terminals 41, 42, 43 and 44, in this example, are connected to the LAN wiring 1. Each of the terminals 41, 42, 43 and 44 is configured by a LAN IC and a microprocessor unit, and explanation of the terminals 42 and 43 will be given here.

To the LAN wiring 1, the LAN ICs 2a and 3a of the terminals 42 and 43 are connected. Each of the LAN ICs 2a and 3a is connected to each of the microprocessor units (MPU) 2b and 3b which produce and process communication data. To the microprocessor unit 2b of the terminal 42, an actuator 20 which is driven by this microprocessor unit 2b is connected, and to the microprocessor unit 3b of the terminal 43, a switch 30 is connected.

Each of the LAN ICs 2a and 3a is configured as shown in Fig. 2 when the LAN IC 2a is taken for an example.

In Fig. 2, reference symbol 5 designates a transmission source address storing unit which stores transmission source address numbers specifying transmission source of data (the terminal 42 in this case), the unit being connected to a transmission signal generating unit 6. The transmission signal generating unit 6 converts communication data, obtained by adding transmission source address stored in the transmission source address storing unit 5 to data sent from the microprocessor unit 2b, and further by converting data necessary for communication to be described later, into a serial electric signal according to a predetermined communication method to sent it to a transceiver 9.

On the other hand, reference symbol 7 designates a reception source address storing unit which stores reception source address (having the same meaning of transmission source address, and in this case the terminal 42) for judging whether the data received is destined for itself or not, the unit being connected to a reception signal decoding unit 8. The reception signal decoding unit 8 judges whether the signal received is destined for itself or not by the fact that the transmission destination address included in the signal received coincides with the reception source address stored in the reception source address storing unit 7 or not, and judges whether data is normal or not, then converts it into a signal which the microprocessor unit 2b can receive and sends it thereto.

The transceiver 9 converts an electric signal sent from the transmission signal generating unit 6 into the one as intense as the LAN wiring 1 is sufficiently capable of transmission and sends it thereto, and then converts then signal received from the LAN wiring 1 into the one which the reception signal decoding unit 8 can easily receive to wave-form-shape it.

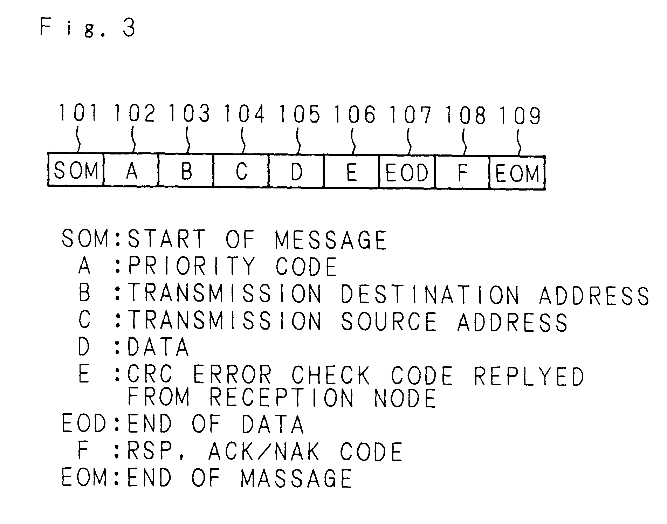

Fig. 3 is a schematic diagram showing an example of a basic frame format for LAN communication used in units as aforementioned.

The frames are arranged in order of SOM (Start of Message) 101, A (priority code, that is, priority designation code at detecting of collision) 102, B (transmission destination address) 103, C (transmission source address) 104, D (data) 105, E (CRC error check code) 106, EOD (End Of Data) 107, F (RSP, that is, ACK/NAK code replied by a reception side) 108, and EOM (End Of Message) 109, from the head.

Explanation will be given of the operation of a conventional apparatus having such a configuration as aforementioned.

Here, in the microprocessor, the transmission destination address should be programmed to be the reception source address of the terminal 42 stored in advance so that an actuator 20 of the terminal 42 is operated when a switch 30 of the terminal 43 is ON. This means that, the actuator 20 is operated to move a wiper when a driver turns ON the switch 30, in the case where the LAN system shown in Fig. 1, for example, is installed in a vehicle and the actuator 20 is the one which operates the wiper, and in the case where the switch 30 is a wiper switch.

When the switch 30 connected to the terminal 43 is operated to be ON by a driver, for example, the microprocessor 3b detects that the switch 30 is ON and sends as data a signal which represents the fact to the LAN IC 3a.

The LAN IC 3a transmits to the LAN wiring 1 as an electric signal the signal given from the microprocessor 3b and transmission source address stored in the transmission source address storing unit 5 according to such a basic frame format as shown in Fig. 3 necessary for communication through the transceiver 9.

In each of the other terminals 41, 42 and 44 connected to the LAN wiring 1, each LAN IC 2a or the like, always receives a signal which is sent, and compares the reception source address of itself stored in each of the reception source address storing unit 7 with the transmission destination address transmitted, and receives the set of the signals when both addresses coincide with each other. And CRC checking is performed to detect whether the data is changed or not, and the reception signal decoding unit 8 executes processing necessary for receiving, and the data is sent to the microprocessor unit 2b (here, the data is assumed to be received by the LAN IC 2a). The microprocessor unit 2b receives this data to drive the actuator 20.

Since the conventional communication control apparatus is so configured as aforementioned, even in the case where, for example, a simple signal such as ON/OFF signal of a switch or the like is transmitted, it is necessary to combine a switch with a microcomputer unit and the LAN IC, thereby to bring about a complicated and large sized communication system connected to the apparatus and to the production cost.

The EP-A-0 367 177 discloses a communication control apparatus according the preambles of the claims 1,3, and 5.

### SUMMARY OF THE INVENTION

The present invention has been devised in consideration of such circumstances and the object thereof is to provide a communication control apparatus capable of transmitting a signal to each of a plurality of destinations through a communication line by one communication apparatus without any assistance of another apparatus and capable of receiving a signal similarly.

The object is solved by the communication control apparatus of claims 1,3, and 5.

According to the communication control apparatus of claim 1, input signals from a plurality of input terminals can be received directly by a communication control apparatus at the transmission side, and are transmitted to the LAN wiring after being added to a respective transmission source/destination address by the transmission signal generating unit.

And according to the communication control apparatus of claim 3, output signals to a plurality of output terminals are received by a communication control apparatus at the reception side, and the output terminal from which a signal should be outputted is specified to output the signal by the reception signal decoding unit.

According to the communication control apparatus of claim 5, input signals from a plurality of input terminals can be received directly by a communication control apparatus at the transmission side, and are transmitted to the LAN wiring after being added to a respective transmission source/destination address by the transmission signal generating unit, and output signals to a plurality of output terminals are received by a communication control apparatus at the reception side, and the output terminal from which a signal should be outputted is specified to output the signal by the reception signal decoding unit.

Further features of the invention are cited in the dependent claims.

### BRIEF DESCRIPTION OF THE DRAWINGS

Fig. 1 is a schematic diagram showing a configuration example of a LAN system to be installed in a vehicle as an example of a conventional LAN system,
Fig. 2 is a block diagram showing an outline of an inner configuration of a LAN IC as a communication control apparatus connected to a LAN wiring of a LAN system to be installed in a vehicle as an example of a conventional LAN system,
Fig. 3 is a schematic diagram showing an example of a basic format for LAN communication,
Fig. 4 is a schematic diagram showing a configuration example of a LAN system to be installed in a vehicle as an example of a LAN system to which a communication control apparatus of the invention is connected, and
Fig. 5 is a block diagram showing an outline of an inner configuration of a LAN IC as a communication control apparatus of the invention.

### DESCRIPTION OF THE PREFERRED EMBODIMENTS

In the following, explanation will be made of the present invention referring to drawings showing embodiments thereof.

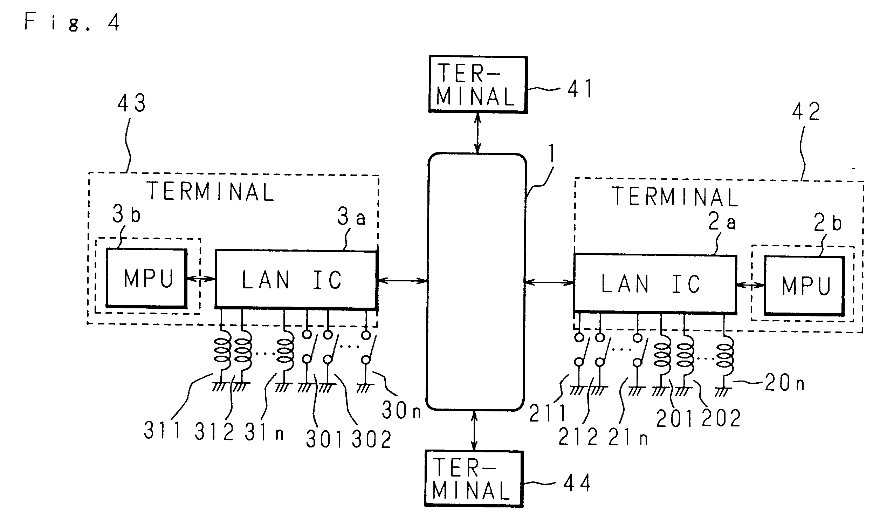

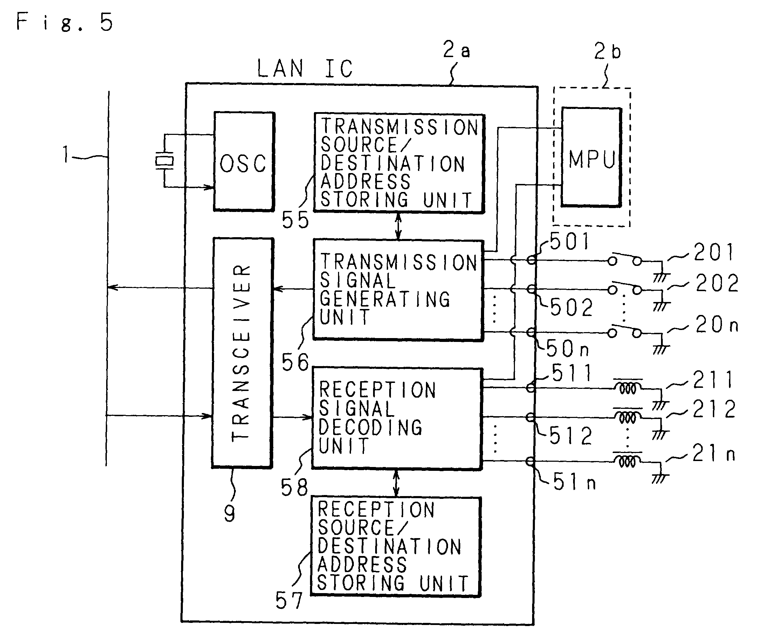

Fig. 4 is a schematic diagram showing a configuration example of a LAN system, and Fig. 5 is a block diagram showing an outline of an inner configuration of a LAN IC as a communication control apparatus of the invention, a plurality of which being connected to the LAN wiring. In addition, in Fig. 4 and Fig. 5, the same reference symbols as in Fig. 1 and Fig. 2 referred in the explanation of the aforesaid conventional example show the same or corresponding portions.

In Fig. 4 and Fig. 5, to the LAN wiring 1, four terminals 41, 42, 43 and 44 are connected, in this example. Each of the terminals 41, 42, 43 and 44 is configured by the LAN IC and the microcomputer unit, and here, explanation will be given of the terminals 42 and 43.

To the LAN wiring 1, the LAN ICs 2a and 3a of the terminals 42 and 43 are connected. The respective LAN ICs 2a and 3a are connected to the microcomputer units (MPU) 2b and 3b which produce and process communication data. To the LAN IC 2a of the terminal 42, a plurality of actuators 211 through 21n driven by this LAN IC 2a and a plurality of switches 201 through 20n are connected, and to the LAN IC 3a of the terminal 43, a plurality of actuators 311 through 31n driven by this LAN IC 3a and a plurality of switches 301 through 30n are connected.

Each of the LAN IC 2a and 3a is so configured as shown in Fig. 5, and the LAN IC 2a is taken on an example.

In Fig. 5, reference symbols 501 through 50n designate input terminals of the LAN IC 2a and switches 201 through 20n are connected respectively, and reference symbols 511 through 51n designate output terminals and actuators 211 through 21n are connected respectively.

Reference symbol 55 designates a transmission source/destination address storing unit which stores transmission source address numbers specifying respectively transmission sources (the terminal 42, in this case) of data and respective input terminals 501 through 50n, and stores transmission destination address numbers specifying transmission destinations, the unit being connected to the transmission signal generating unit 56. To the transmission signal generating unit 56, the aforesaid input terminals 501 through 50n are connected. Accordingly, when any of the switches 201 through 20n connected to these input terminals 501 through 50n is ON, the transmission signal generating unit 56 adds the transmission source/destination address, stored in the transmission source/destination address storing unit 55, corresponding to the switches 201 through 20n which are ON, to the signal representing that the switch is ON, and arranges the communication data obtained by adding data required for communication according to the basic frame format shown in Fig. 3 explained before, further converts it into a serial electric signal according to a predetermined communication method to transmit it to the transceiver 9.

On the other hand, reference numeral 57 designates a reception source/destination address storing unit which stores a reception source address (having the same meaning as a transmission source address) which judges whether the data received is destined for itself (the terminal 42, in this case) or not, and is destined for the output terminals 511 through 51n or not, the unit being connected to the reception signal decoding unit 58. To the reception signal decoding unit 58, the aforesaid output terminals 511 through 51n are connected. Accordingly, the reception signal decoding unit 58 judges which of the output terminals 511 through 51n of itself is the destination of the signal received by comparing a transmission destination address included in the signal received with a reception source address stored in the reception source/destination address storing unit 57, further judges whether the signal is the one from a predetermined destined reception destination or not by comparing a transmission source address included in the signal received with a reception destination address stored in the reception source/destination address storing unit 57, and judges whether data is normal or not.

The transceiver 9 converts an electric signal sent from the transmission signal generating unit 56 into the one as intense as the LAN wiring 1 can sufficiently transmit it and transmits it thereto, and converts a signal received from the LAN wiring 1 into the one which can be received easily by the reception signal decoding unit 58 to waveform-shape it.

In the following, explanation will be given of the operation of the apparatus of the invention as aforementioned.

In addition, here, one of the switches 301 through 30n of the terminal 43 is assigned to one of the actuators 211 through 21n of the terminal 42, or one of the switches 301 through 30n of the terminal 43 with some of the actuators 211 through 21n of the terminal 42 in advance, and when one of the switches 301 through 30n of the terminal 43 is ON, one or some of the actuators 211 through 21n of the terminal 42 which are assigned to the switches 301 through 30n in advance are to be operated. This means, for example, that, in the case where the actuator 211, for example, is an actuator for driving a wiper, in the case where the actuators 212 and 213 respectively are actuators for power windows at the right and left of a driver's seat, in the case where the switch 301 is a wiper switch, in the case where the switches 302 and 303 are switches for power windows at the right and left of a driver's seat, and in the case where switch 304 is the one which opens/closes both of the windows at the same time, the actuator 211 is operated to move the wiper by turning ON the wiper switch 301 by a driver, the actuator 212 is operated to open/close the left window by turning ON the switch 302 by a driver, the actuator 213 is operated to open/close the right window by turning ON the switch 303 by a driver, and the actuators 212 and 213 are operated at the same time to open/close the right and left windows at the same time by turning ON the switch 304 by a driver.

Now, when the switch 301 of the terminal 43, for example, is assumed to be operated to be ON by a driver, the LAN IC 3a detects that the switch 301 is ON and transmits through the transceiver 9 as an electric signal to the LAN wiring 1 the signal representing that the switch 301 is ON and the transmission source/destination address specifying the switch 301 as a transmission source and specifying the actuator 211 as a transmission destination stored in the transmission source/destination address storing unit 55, according to a basic frame format as shown in Fig. 3 necessary for communication after arranging data.

In each of the other terminals 41, 42 and 44 connected to the LAN wiring 1, each LAN IC 2a or the like always receives a signal which is sent and in the case where the signal coincides with an address of itself stored in the reception source/destination address storing unit 57, further compares the reception destination address set in the output terminals 511 through 51n with the transmission destination address transmitted, and receives the set of the signals when coincided. And the reception signal decoding unit 58 outputs a signal to the output terminals 511 through 51n which correspond to the transmission source/destination address included in a signal received to operate the actuators 211 through 21n (the actuators 211 in this case) connected to the output terminals 511 through 51n. Thereby, the actuator 211 which is assigned to the switch 301 is operated to move, for example, the wiper.

Similarly, when the switch 302 is ON, the actuator 212 is operated to move the left window, when the switch 303 is ON, the actuator 213 is operated to move the right window, and when the switch 304 is ON, the actuators 213 and 214 are operated at the same time to move the right and left windows at the same time.

In the aforesaid embodiment, the signal from the microcomputer is not dealt with, however, as shown in Fig. 4, the signal from the microcomputer can be transmitted/received in the same way as the signal from each input terminal.

Further, it is obvious that a LAN IC, which does not have to transmit/receive the signal from the microcomputer, can be configured, and it is also obvious that a LAN IC having only a function of receiving or transmitting can be configured.

In addition, it is possible to connect only an input terminal to each LAN IC, or only an output terminal, or connect a combination of both of them of optional numbers.

The aforesaid embodiment has both the transmission source/destination address and reception source/destination address, however, it will do when it has only the transmission destination address or the reception source address.

Further, in the aforesaid embodiment, explanation was given on the example of the case where transmission was performed from the switches 301, 302, 303 and 304 of the LAN IC 3a to the actuators 211, 212 and 213 of the LAN IC 2a, however, it is of course possible for the switches 305 through 30n to operate the other LAN IC, an actuator of the LAN IC of a terminal having the reference number 41, for example. That is, a combination performed between the LAN ICs, and a combination between the input terminals and output terminals in the IC are made freely. In other words, the state of the embodiment is such that if each switch or actuator is added to a LAN IC, the embodiment functions in the same way as the conventional example.

In the aforesaid embodiment, although the storage content of the transmission source/destination address storing unit 55, that is, the corresponding relation between each switch and actuator is set from the beginning, such configuration that the relation is set by a hardware from outside or by a software according to a microcomputer every time the setting is necessary or at a suitable time, is of course possible.

As aforementioned, according to the communication control apparatus of the invention, since a plurality of input terminals and output terminals are set on one communication control apparatus, and an input terminal to which a signal is inputted is specified when the signal is inputted from an input terminal and a signal is transmitted to an output terminal which is assigned to the input terminal in advance, a complicated and a large-sized communication system to which the communication control apparatus of the invention is connected can be prevented from being produced and the production cost can be restrained.

## Claims

1. A communication control apparatus, in which a predetermined signal is subjected to be transmitted to a predetermined destination in the case where the signal is inputted from a signal input terminal, comprises:
a plurality of said signal input terminals (501 through 50n);
a transmission signal generating unit (56); and
a transmitting unit (9) which transmits signal generated by said transmission signal generating unit (56);
characterized by
a transmission source/destination address storing unit (55) which stores transmission source addresses specifying said respective plurality of signal input terminals (501 through 50n) and transmission destination addresses specifying transmission destinations which are assigned to respective signal input terminals in advance to which signal have been inputted; and
said transmission signal generating unit (56) which adds transmission source addresses and transmission destination addresses, stored in said transmission source/destination address storing unit (55), corresponding to signal input terminals to which signals have been inputted, to a predetermined signal representing that signal which has been inputted from a signal input terminal in the case where a signal has been inputted from any of said plurality of signal input terminals (501 through 50n) to generate a transmission signal.

2. A communication control apparatus according to Claim 1, which is connected to a LAN (Local Area Network) arranged in a vehicle.

3. A communication control apparatus, in which a signal is subjected to be outputted to a signal output terminal in the case where a predetermined signal is received by a predetermined reception destination, comprises:
a plurality of said signal output terminals (511 through 51n);
a reception signal decoding unit (58); and
a receiving unit (9) which receives reception signals including a predetermined signal showing that a signal should be outputted to any of said plurality of signal output terminals (511 through 51n);
characterized by
a reception source/destination address storing unit (57) which stores reception source addresses specifying said respective plurality of said signal output terminals (511 through 51n) and reception destination addresses specifying reception sources of signals; and
said reception signal decoding unit (58) which compares the transmission destination/source address included in a reception signal with the reception source/destination address stored in said reception source/destination address storing unit (57) in the case where said receiving unit (9) receives a reception signal including said predetermined signal, and outputs a signal to one or a plurality of output terminals having the coincided reception source/destination address.

4. A communication control apparatus according to Claim 3, which is connected to a LAN (Local Area Network) arranged in a vehicle.

5. A communication control apparatus in which a predetermined signal is subjected to be transmitted to a predetermined destination in the case where a signal has been inputted from a signal input terminal, and the signal is subjected to be outputted to a signal output terminal in the case where a predetermined signal is received from a predetermined reception destination, comprises:
a plurality of said signal input terminals (501 through 50n);
a transmission signal generating unit (56);
a transmitting unit (9) which transmits a signal generated by said transmission signal generating unit (56);
a plurality of said signal output terminals (511 through 51n);
a reception signal decoding unit (58);
and a receiving unit (9) which receives reception signals including a predetermined signal showing that a signal should be outputted to any of said plurality of signal output terminals (511 through 51n);
characterized by
a reception source/destination address storing unit (57) which stores reception source addresses specifying said respective plurality of said signal output terminals (511 through 51n) and reception destination addresses specifying reception sources of signals;
a transmission source/destination address storing unit (55) which stores transmission source addresses specifying said respective plurality of signal input terminals (501 through 50n) and transmission destination addresses specifying transmission destinations which are assigned to respective signal input terminals in advance to which signals have been inputted;
said transmission signal generating unit (56) which adds transmission source addresses and transmission destination addresses, stored in said transmission source/destination address storing unit (55), corresponding to signal input terminals to which signals have been inputted, to a predetermined signal representing that signal which has been inputted from a signal input terminal in the case where a signal has been inputted from any of said plurality of signal input terminals (501 through 50n) to generate a transmission signal; and
said reception signal decoding unit (58) which compares the transmission destination/source address included in a reception signal with the reception source/destination address stored in said reception source/destination address storing unit (57) in the case where said receiving unit (9) receives a reception signal including said predetermined signal, and outputs a signal to one or a plurality of output terminals having the coincided reception source/destination address.

6. A communication control apparatus according to Claim 5, which is connected to a LAN (Local Area Network) arranged in a vehicle.

## Patentansprüche

1. Kommunikationssteuereinrichtung, bei der ein vorbestimmtes Signal einer Übertragung zu einem vorbestimmten Ziel in dem Fall unterzogen wird, in dem das Signal von einem Eingabeanschluß eingegeben wird, mit:
einer Mehrzahl der Signaleingabeanschlüsse (501-50n);
einer Übertragungssignalerzeugungseinheit (56) und
einer Übertragungseinheit (9), die das durch die Übertragungssignalerzeugungseinheit (56) erzeugte Signal überträgt;
gekennzeichnet durch
eine Übertragungsquellen-/zieladressenspeichereinheit (55), die die Übertragungsquellenadressen, die die jeweilige Mehrzahl von Signaleingabeanschlüssen (501-50n) angeben, und Übertragungszieladressen, die Übertragungsziele angeben, die vorher zu entsprechenden Signaleingabeanschlüssen zugeordnet werden, zu denen ein Signal eingegeben wurde, speichert; und
die Übertragungssignalerzeugungseinheit (56), die Übertragungsquellenadressen und Übertragungszieladressen, die in der Übertragungsquellen-/zieladressenspeichereinheit (55) gespeichert sind, entsprechend den Signaleingabeanschlüssen zu denen Signale eingegeben wurden zu einem vorbestimmten Signal addiert, das das Signal darstellt, das von einem Signaleingabeanschluß eingegeben wurde, in dem Fall, in dem ein Signal von einem der Mehrzahl von Signaleingabeanschlüssen (501-50n) eingeben wurde, um ein Übertragungssignal zu erzeugen.

2. Kommunikationssteuereinrichtung nach Anspruch 1, die mit einem LAN (Lokales Netz) verbunden ist, das in einem Fahrzeug angeordnet ist.

3. Kommunikationssteuereinrichtung, bei der ein Signal einer Ausgabe zu einem Signalausgabeanschluß in dem Fall unterworfen wird, in dem ein vorbestimmtes Signal durch ein vorbestimmtes Empfangsziel empfangen wird, mit:
einer Mehrzahl von den Signalausgabeanschlüssen (511-51n);
einer Empfangssignaldekodiereinheit (58); und
einer Empfangseinheit (9), die Empfangssignale empfängt, die ein vorbestimmtes Signal enthalten, das zeigt, daß ein Signal zu einem der Mehrzahl von Signalausgabeanschlüssen (511-51n) ausgegeben werden soll;
gekennzeichnet durch
eine Empfangsquellen-/zieladressenspeichereinheit (57), die Empfangszieladressen, die die jeweilige Mehrzahl der Signalausgabeanschlüsse (511-51n) angibt, und Empfangszieladressen, die die Empfangsquellen von Signalen angeben, speichert; und
die Empfangssignaldekodiereinheit (58), die die in einem Empfangssignal enthaltene Übertragungsziel-/quellenadresse mit der in der Empfangsquellen-/ziel-adressenspeichereinheit (57) gespeicherten Empfangsquellen-/zieladresse in dem Fall vergleicht, in dem die Empfangseinheit (9) ein Empfangssignal emp-fängt, das das vorbestimmte Signal enthält, und ein Signal zu einem oder der Mehrzahl von Ausgabeanschlüssen ausgibt, die die übereinstimmende Empfangsquellen-/zieladresse aufweisen.

4. Kommunikationssteuereinrichtung nach Anspruch 3, die mit einem LAN (Lokales Netz) verbunden ist, das in einem Fahrzeug angeordnet ist.

5. Kommunikationssteuereinrichtung, bei der ein vorbestimmtes Signal einer Übertragung zu einem vorbestimmten Ziel in dem Fall unterzogen wird, in dem ein Signal von einem Eingabeanschluß eingegeben wurde, und bei der das Signal einer Ausgabe zu einem Ausgabeanschluß in dem Fall unterzogen wird, in dem ein vorbestimmtes Signal von einem vorbestimmten Empfangsziel empfangen wird, mit:
einer Mehrzahl der Signaleingabeanschlüsse (501-50n);
einer Übertragungssignalerzeugungseinheit (56);
einer Übertragungseinheit (9), die ein durch die Übertragungssignalerzeugungseinheit (56) erzeugtes Signal überträgt;
einer Mehrzahl der Signalausgabeanschlüsse (511-51n);
einer Empfangssignaldekodiereinheit (58);
und einer Empfangseinheit (9), die Empfangssignale empfängt, die ein vorbestimmtes Signal enthalten, das zeigt, das ein Signal zu einer der Mehrzahl von Ausgabesignalanschlüssen (511-51n) ausgeben werden soll;
gekennzeichnet durch
eine Empfangsquellen-/zieladressenspeichereinheit (57), die Empfangsquellenadressen, die die jeweilige Mehrzahl der Signalausgabeanschlüsse (511-51n) angegeben, und Empfangszieladressen, die Empfangsquellen von Signalen angeben, speichert;
eine Übertragungsquellen-/zieladressenspeichereinheit (55), die Übertragungsquellenadressen, die die jeweilige Mehrzahl von Signaleingabeanschlüssen (501-50n) angeben, und Übertragungszieladressen, die Übertragungsziele angeben, die vorher zu den jeweiligen Signaleingabeanschlüssen zugeordnet werden, zu denen die Signale eingegeben wurden, speichert;
die Übertragungssignalerzeugungseinheit (56), die Übertragungsquellenadressen und Übertragungszieladressen, die in der Übertragungsquellen-/zieladressenspeichereinheit (55) gespeichert sind, entsprechend den Signaleingabeanschlüssen, zu denen Signale eingegeben wurden, derart zu einem vorbestimmten Signal addiert, das das Signal darstellt, das von einem Signaleingabeanschluß eingegeben wurde, in dem Fall, in dem ein Signal von einem der Mehrzahl von Signaleingabeanschlüssen (501-50n) eingegeben wurde, daß ein Übertragungssignal erzeugt wird; und
die Empfangssignaldekodiereinheit (58), die die in einem Empfangssignal enthaltene Übertragungsziel-/quellenadresse mit der in der Empfangsquellen-/zieladressensspeichereinheit (57) gespeicherten Empfangsquellen-/zieladresse in dem Fall, in dem die Empfangseinheit (9) ein Empfangssignal empfängt, das das vorbestimmte Signal enthält, vergleicht und ein Signal zu einer oder einer Mehrzahl von Ausgabeanschlüssen ausgibt, die die übereinstimmende Empfangsquellen-/zieladresse aufweisen.

6. Kommunikationssteuereinrichtung nach Anspruch 5, die mit einem LAN (Lokales Netz) verbunden ist, das in einem Fahrzeug angeordnet ist.

## Revendications

1. Dispositif de commande de communications, dans lequel un signal prédéterminé est destiné être transmis vers une destination prédéterminée dans le cas où le signal est entré à partir d'une borne d'entrée de signal, comprenant:
une pluralité desdites bornes d'entrée de signal (501 à 50n);
une unité de production de signal d'émission (56), et
une unité d'émission (9) qui émet un signal produit par ladite unité de production de signal d'émission (56);
caractérisé par:
une unité de mémorisation d'adresses de sources/destinations d'émission (55) qui mémorise des adresses de sources d'émission spécifiant ladite pluralité respective de bornes d'entrée de signal (501 à 50n) et des adresses de destinations d'émission spécifiant des destinations d'émission qui sont affectées au préalable aux bornes d'entrée de signal respectives sur lesquelles le signal a été entré; et par
ladite unité de production de signal d'émission (56) qui ajoute des adresses de sources d'émission et des adresses de destinations d'émission, mémorisées dans ladite unité de mémorisation d'adresses de sources/destinations d'émission (55), correspondant aux bornes d'entrée de signal sur lesquelles les signaux ont été entrés, à un signal prédéterminé représentant le signal qui a été entré depuis une borne d'entrée de signal, dans le cas où un signal a été entré à partir de l'une quelconque de ladite pluralité de bornes d'entrée de signal (501 à 50n), afin de produire un signal d'émission.

2. Dispositif de commande de communications selon la revendication 1, qui est connecté à un réseau LAN (réseau local de zone) placé dans un véhicule.

3. Dispositif de commande de communications, dans lequel un signal est destiné à être délivré vers une borne de sortie de signal dans le cas où un signal prédéterminé est reçu par une destination de réception prédéterminée, comprenant:
une pluralité desdites bornes de sortie de signal (511 à 51n);
une unité de décodage de signal de réception (58); et
une unité de réception (9) qui reçoit les signaux de réception incluant un signal prédéterminé montrant qu'un signal devrait être délivré à l'une quelconque de ladite pluralité de bornes de sortie (511 à 51n);
caractérisé par:
une unité de mémorisation d'adresses de sources/destinations de réception (57) qui mémorise des adresses de sources de réception spécifiant ladite pluralité respective desdites bornes de sortie de signal (511 à 51n) et des adresses de destinations de réception spécifiant des sources de réception de signaux; et par
ladite unité de décodage de signal de réception (58) qui compare l'adresse de destination/source d'émission incluse dans un signal de réception avec l'adresse de source/destination de réception mémorisée dans ladite unité de mémorisation d'adresses de sources/destinations de réception (57) dans le cas où ladite unité de réception (9) reçoit un signal de réception incluant ledit signal prédéterminé, et délivre un signal à une borne ou une pluralité de bornes de sortie dont les adresses de source/destination de réception coïncident.

4. Dispositif de commande de communications selon la revendication 3, qui est connecté à un réseau LAN (réseau de zone local) placé dans un véhicule.

5. Dispositif de commande de communications dans lequel un signal prédéterminé est destiné à être émis vers une destination prédéterminée dans le cas où un signal a été entré à partir d'une borne d'entrée de signal, et le signal est destiné à être délivré à une borne de sortie de signal dans le cas où un signal prédéterminé est reçu depuis une destination de réception prédéterminée, comprenant:
une pluralité desdites bornes d'entrée de signal (501 à 50n);
une unité de production de signal d'émission (56);
une unité d'émission (9) qui émet un signal produit par ladite unité de production de signal d'émission (56);
une pluralité desdites bornes de sortie de signal (511 à 51n);
une unité de décodage de signal de réception (58); et
une unité de réception (9) qui reçoit les signaux de réception incluant un signal prédéterminé montrant qu'un signal devrait être délivré à l'une quelconque de ladite pluralité de bornes de sortie de signal (511 à 51n);
caractérisée par:
une unité de mémorisation d'adresses de sources/destinations de réception (57) qui mémorise des adresses de sources de réception spécifiant ladite pluralité respective desdites bornes de sortie de signal (511 à 51n) et des adresses de destinations de réception spécifiant les sources de réception de signaux;
une unité de mémorisation d'adresses de sources/destinations d'émission (55) qui mémorise des adresses de sources d'émission spécifiant ladite pluralité respective de bornes d'entrée de signal (501 à 50n) et des adresses de destinations d'émission spécifiant les destinations d'émission qui ont été affectées au préalable aux bornes d'entrée de signal respectives sur lesquelles les signaux ont été entrés;
ladite unité de production de signal d'émission (56) qui ajoute des adresses de sources d'émission et des adresses de destinations d'émission, mémorisées dans ladite unité de mémorisation d'adresses de sources/destinations d'émission (55), correspondant aux bornes d'entrée de signal sur lesquelles les signaux ont été entrés, à un signal prédéterminé représentant ce signal qui a été entré à partir d'une borne d'entrée de signal dans le cas où un signal a été entré à partir de l'une quelconque de ladite pluralité de bornes d'entrée de signal (501 à 50n) afin de produire un signal d'émission; et par
ladite unité de décodage de signal de réception (58) qui compare l'adresse de destination/source d'émission incluse dans un signal de réception avec l'adresse de source/destination de réception mémorisée dans ladite unité de mémorisation d'adresses de sources/destinations de réception (57) dans le cas où ladite unité de réception (9) reçoit un signal de réception incluant ledit signal prédéterminé, et délivre un signal sur une borne ou une pluralité de bornes de sortie dont l'adresse de source/destination de réception coïncide.

6. Dispositif de commande de communications selon la revendication 5, qui est connecté à un réseau LAN (réseau local de zone) placé dans un véhicule.
